# FASCICULE DE BREVET EUROPEEN

(11) **EP 0 545 783 B1**
(45) Date de publication et mention de la délivrance du brevet: **03.02.1999**
(21) Numéro de dépôt: 92403185.9
(22) Date de dépôt: 26.11.1992
(51) Int. Cl.: H04L 27/32, H04Q 7/32

(54) **Modem semi-duplex pour réseau de radiotéléphones GSM**
Halbduplex-Modem für GSM-Mobilfunknetz
Half-duplex modem for GSM radio telephone network

(30) Priorité: 29.11.1991 FR 9114784
(43) Date de publication de la demande: 09.06.1993
(73) Titulaire: SOCIETE D'APPLICATIONS GENERALES D'ELECTRICITE ET DE MECANIQUE SAGEM, 75783 Paris Cédex 16 (FR)
(72) Inventeur: Charbonnier, Philippe, F-78600 Maisons Laffitte (FR); Pintaux, Jean-Bernard, F-77150 Lesigny (FR)
(74) Mandataire: Bloch, Gérard

(56) Documents cités:
- EP-A- 0 258 697
- US-A- 2 650 266
- US-A- 4 015 204
- IEEE GLOBAL TELECOMMUNICATIONS CONFERENCE & EXHIBITION GLOBECOM'89, Dallas, Texas, 27-30 novembre 1989, vol. 2, pages 1075-1079, IEEE, New York, US; A. COLEMAN et al.: "Subjective performance evaluation of the RPE-LTP codec for the Pan-European cellular digital mobile radio system"
- IDEM
- PATENT ABSTRACTS OF JAPAN, vol. 9, no. 143 (E-322)(1866), 18 juin 1985; & JP-A-60 025 354 (FUJITSU K.K.) 08-02-1985
- SPEECH COMMUNICATION, vol. 7, no. 2, juillet 1988, pages 113-123, Amsterdam, NL; J.E. NATVIG: "Pan-European speech coding standard for digital mobile radio"
- 40TH IEEE VEHICULAR TECHNOLOGY CONFERENCE 1990, Orlando, Florida, 6-9 mai 1990, pages 323-325, IEEE, New York, US; D. LIN et al.: "Data compression of voiceband modem signals"
- PATENT ABSTRACTS OF JAPAN, vol. 7, no. 272 (E-214)(1417), 3 décembre 1983; & JP-A-58 153 480 (NIPPON DENKI K.K.) 12-09-1983

## Description

Le réseau GSM (Groupe Special Mobile) permet l'interconnexion de radiotétéphones mobiles entre eux ainsi qu'entre un radiotéléphone et un téléphone normal par l'intermédiaire du réseau RTC (réseau téléphonique commuté).

Avec un radiotéléphone GSM, le combiné délivre des données vocales analogiques qui sont transformées par un codeur-décodeur (Codec) en un flot numérique à 14 kbits/s pour transmission sur la voie radio. Ce rythme, dans la partie terrestre du réseau GSM, est transformé en 64 kbits/s, pour l'intercommunication avec le réseau RTC. Le réseau RTC, dans l'essentiel de son infrastructure, transporte le signal téléphonique de 300 à 3 400 Hz sous forme numérique par échantillonnage à la fréquence de 8 kHz, à raison de 8 bits par échantillon, ce qui représente bien un flot de données au rythme de 64 kbits/s.

Le codec GSM a été conçu pour transmettre la voix et convient mal à la transmission de données de modems (modulateurs - démodulateurs).

Or le réseau RTC sert couramment à transmettre, outre la voix, des signaux de modem de transmission de données occupant la même bande 300-3400 HZ. Pour offrir le même service sur le réseau GSM, il a été prévu que les transmissions de données sur GSM se feraient directement en numérique, ce qui conduit d'ailleurs à une meilleure occupation du spectre et à une plus grande robustesse de transmission.

Un mobile GSM de transmission de données transmet donc en numérique, à certains débits déterminés par les normes GSM, par exemple 9600 ou 4800 bits/s. A l'interconnexion avec le réseau RTC, au moyen d'unités d'interfonctionnement IWF (interworking functions), comprenant des batteries de modems aux normes du CCITT, les données numériques sont transformées en signaux analogiques.

Une telle transmission numérique est satisfaisante pour l'interconnexion de deux radiotéléphones mobiles entre-eux, mais elle présente des inconvénients.

D'abord, pour communiquer avec des terminaux de transmission de données sur le réseau RTC, il faut attendre la disponibilité des fonctions d'interfonctionnement dans le réseau GSM. Ensuite, la transmission est limitée à l'emploi de modems normalisés qui, en outre, n'assurent pas une parfaite confidentialité de transmission. Or deux correspondants peuvent parfaitement vouloir maîtriser de bout en bout le système de modulation et utiliser des protocoles particuliers adaptés aux taux d'erreur global ainsi qu'à l'application. Il en est ainsi de la transmission de petits messages au sein d'une flotte de véhicules et, plus généralement, de la transmission de quantités d'information ou de débits faibles.

La présente invention vise à contourner ces inconvénients, c'est-à-dire, et éventuellement, à s'affranchir des unités d'interfonctionnement IWF du réseau GSM.

A cet effet, la présente invention concerne un modem semi-duplex selon la revendication 1.

On remarquera que le document US-A-4 015 204 enseigne un modem dans lequel on superpose trois porteuses modulées en amplitude, afin d'augmenter le débit global d'une transmission de données binaires, pour une bande-passante déterminée de la ligne de transmission. Il s'agit donc d'un choix de type de modulation limitant la bande-passante nécessaire à celle de la ligne.

Quant au document IEEE GLOBAL TELECOMMUNICATIONS CONFERENCE & EXHIBITION GLOBECOM 89, Dallas, Texas, 27-30 novembre 1989, vol. 2, pages 1075-1079, IEEE, New York, US ; A. COLEMAN et al., il ne traite que d'un codec à prédiction pour la radiotéléphonie et n'enseigne que la simple constatation du fait que ce codec particulier à prédiction peut transmettre à 300b/s les données d'un modem du commerce et ne le peut pas à 1200b/s.

Aucun de ces documents n'enseigne de faire ressembler des données numériques à de la parole.

Les données transmises par le modem de l'invention ressemblent à des données de parole, sans en être, ce qui permet aux correspondants de faire intrusion sur les circuits de parole du réseau GSM et donc d'éviter les inconvénients des unités IWF.

Ainsi, et par exemple, le modem de l'invention pourra être substitué au microphone et au haut-parleur d'un radiotéléphone GSM et servir d'interface entre un tel radiotéléphone et un terminal télématique à écran et clavier tout autant du commerce. Les données numériques du terminal d'un abonné sont transformées, dans le modem, en pseudo données analogiques de parole, traversent le codec du radiotéléphone et en sortent au rythme de 14 kbits/s qui est transposé, dans le réseau GSM, à 64 kbits/s sans passer par les unités IWF, avant de traverser le réseau RTC et d'arriver sur le terminal télématique d'un autre abonné, avec une communication transparente de bout en bout entre les deux abonnés.

On soulignera que l'invention, finalement, va à l'encontre de l'évolution technique à laquelle on a assisté jusqu'à maintenant.

Dans la forme de réalisation préférée du modem de l'invention, il est prévu des moyens de modulation en amplitude et en fréquence à un faible rythme, avantageusement de 300 bauds. Le signal résultant est ainsi doté de caractéristiques proches de celles de la voix humaine au regard du codec GSM. A l'inverse, un rythme élevé et la modulation de phase, généralement adoptés dans les modems performants, traversent mal le codec GSM.

De préférence encore, le modem de l'invention comporte des moyens de génération de signaux d'une fréquence choisie parmi plusieurs, avantageusement quatre, et d'une amplitude choisie aussi parmi plusieurs, avantageusement deux, le modem transposant ainsi des données numériques d'entrée en signaux de sortie choisis parmi huit (2³), soit sur trois bits et huit états par baud, avec un débit total, dans le cas d'un rythme de modulation de 300 bauds, de 900 bits/s.

L'invention sera mieux comprise à l'aide de la description suivante de deux formes de réalisation du modem de l'invention, en référence au dessin annexé sur lequel
- - la figure 1: est une représentation schématique par blocs du modulateur de la première forme de réalisation du modem de l'invention ;
- - la figure 2: est une représentation schématique du démodulateur de la première forme de réalisation du modem de l'invention ;
- - la figure 3: est une représentation schématique du modulateur de la deuxième forme de réalisation du modem de l'invention et
- - la figure 4: est une représentation schématique du démodulateur de la deuxième forme de réalisation du modem de l'invention.

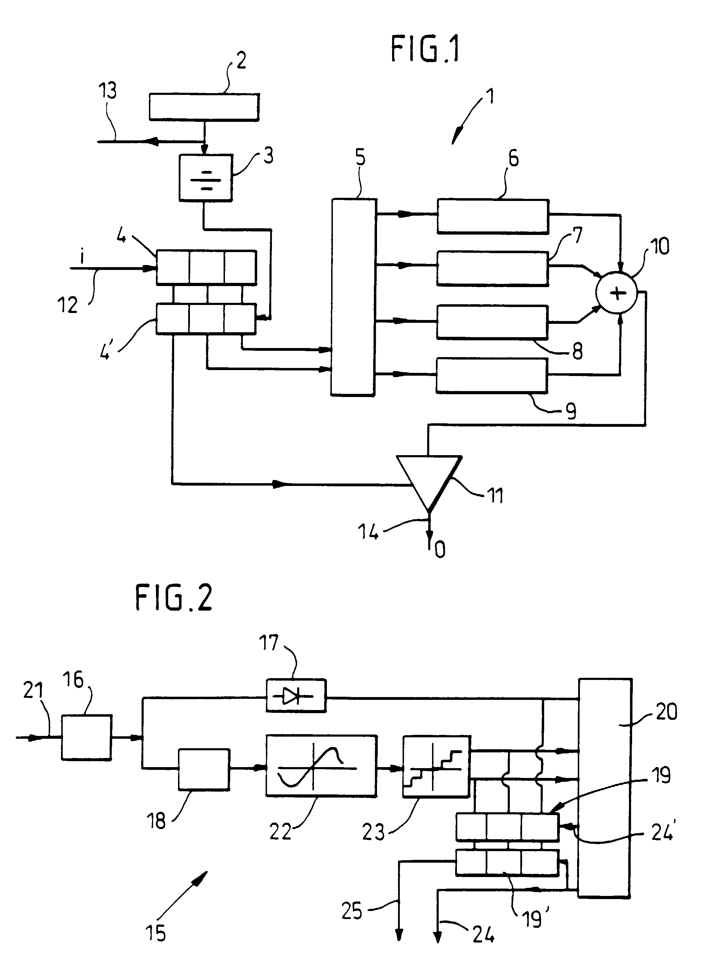

Le modulateur 1 du modem semi-duplex de la figure 1 comporte une horloge 2, un registre à décalage 4, un circuit de portes logiques 5, une batterie de quatre générateurs de fréquence 6 - 9, un multiplexeur 10 et un amplificateur à gain variable 11.

Dans l'exemple considéré, le modulateur peut fournir huit états correspondant à quatre fréquences et deux amplitudes. Les deux amplitudes correspondent à deux gains différents A₁, A₂ de l'amplificateur 11, ici 1 et 2. Les quatre fréquences des quatre générateurs 6 - 9 sont ici, mais elles pourraient être différentes, f1 = 900 Hz, f2 = 1 100 Hz, f3 = 1 300 Hz, f4 = 1 500 Hz, générant un spectre parfaitement compatible avec la bande passante du réseau téléphonique commuté ordinaire RTC, qui s'étend de 300 à 3 400 Hz, et avec la réponse en fréquence pure du codec GSM (connue pour dépasser 2000 Hz), permettant, au travers des réseaux GSM et RTC, de mettre en relation deux terminaux télématiques d'un abonné appelant et d'un abonné appelé connectés à l'un ou l'autre des deux réseaux.

L'horloge 2 fournit ici 900 bits par seconde. Les bits du signal numérique d'entrée 12 sont groupés par paquets de trois, ou tribits, au moyen d'un registre 4 recevant les bits en série à 900 bits/s et les recopiant en parallèle dans un registre 4' à un rythme de 300 Hz fourni par le diviseur 3. Les deux derniers bits procèdent à la sélection de fréquence, effectuée dans le circuit de portes 5, relié au registre 4', selon la table suivante

| | |
|---|---|
| 00 | f1 |
| 01 | f2 |
| 10 | f3 |
| 11 | f4 |

pour commander la mise en marche des générateurs 6 - 9.

Le premier bit procède à la sélection d'amplitude et commande le gain de l'amplificateur 11.

Ainsi, la première case du registre 4 est reliée à la commande de gain de l'amplificateur 11, les deux dernières cases, au circuit de portes 5.

On notera que le regroupement des bits d'entrée en tribits s'effectue sans référence de phase et c'est sans importance. De même, il est indifférent qu'un bit 0 ou 1 commande un gain 1 ou 2 de l'amplificateur 11. Le signal d'horloge 13 de l'horloge 2 est en effet récupéré par le démodulateur du modem de l'abonné appelé et la démodulation procède exactement aux étapes inverses de celles de la modulation.

Le signal fourni par l'un des générateurs 6 - 9, qui traverse le multiplexeur 10, est amplifié, selon l'un ou l'autre de ses deux gains, par l'amplificateur 11 qui fournit le signal de sortie 14.

Le démodulateur 15 de la première forme de réalisation du modem semi-duplex de la figure 2 comporte un circuit 16 de contrôle automatique de gain qui est relié à un détecteur d'amplitude 17 et un écreteur 18 et qui reçoit le signal d'entrée 21. Le détecteur 17, relié à un extracteur d'horloge 20, fournit le premier bit d'amplitude qui est stocké dans la première case d'un registre à décalage 19. L'écreteur 18 est relié à l'entrée d'un démodulateur de fréquence 22 dont la sortie est reliée à un circuit de seuil 23 qui fournit sur deux fils, reliés à l'extracteur 20, les deux bits de fréquence qui sont stockés respectivement dans les deux dernières cases du registre 19. L'extracteur 20, connu en soi, procède à l'extraction du signal d'horloge 24, à 900 Hz, ici par boucle a verrouillage de phase. Un signal d'horloge 24', à 300 Hz, provoque la copie parallèle du registre 19 dans un registre 19' qui est vidé en série au rythme de l'horloge 24 à 900 Hz pour constituer le signal numérique de sortie 25.

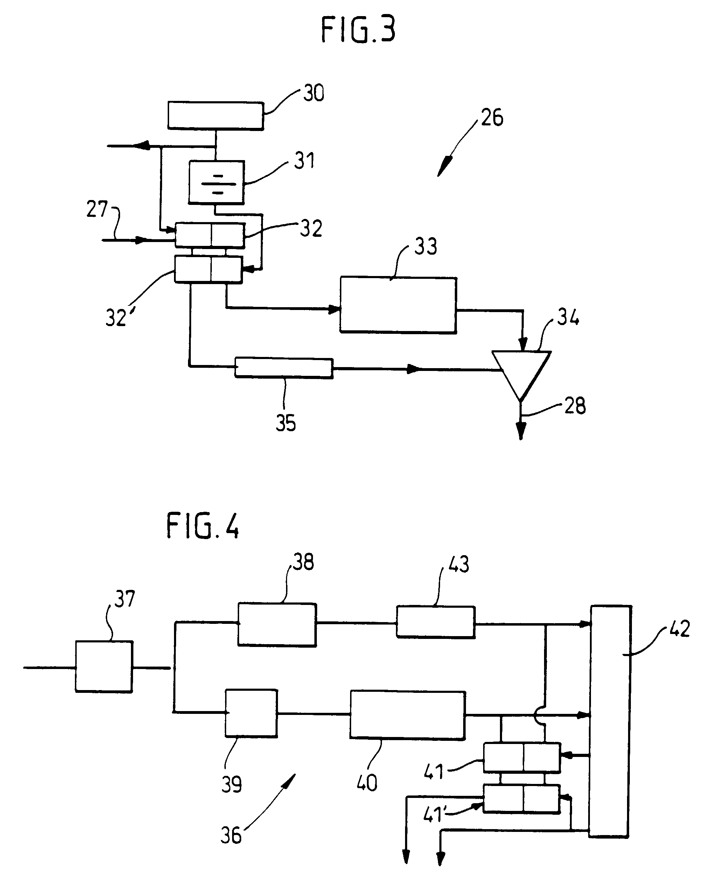

Le modulateur 26 de la deuxième forme de réalisation du modem semi-duplex de la figure 3 comporte une horloge 30, un diviseur d'horloge 31, un registre à décalage 32, un modem du commerce V 21 à modulation de fréquence et à retard déterminé, référencé 33 sur le dessin, un amplificateur à gain variable 34, une ligne à retard 35, entre le registre 32 et l'amplificateur 34, pour engendrer un retard égal à celui du modem 33.

Dans ce deuxième exemple, le modulateur 26 est structuré autour d'un modulateur du commerce et ne fournit que quatre états possibles correspondant à deux fréquences et deux amplitudes possibles. Le modem 33, qui peut être par exemple le modem EF7910 de la société Thomson, peut fournir un signal modulé à 980 Hz et 1 180 Hz. L'horloge 30 fournit ici 600 bits par seconde. Les bits du signal numérique d'entrée 27 sont groupés par paires au moyen du registre 32 les recevant en série à 600 bits/s et les recopiant en parallèle dans un registre 32' à un rythme de 300 Hz fourni par le diviseur 31, qui divise par 2. Le dernier bit procède à la sélection de fréquence dans le modem 33 et le premier bit à la sélection d'amplitude et commande le gain de l'amplificateur 34 qui founit le pseudosignal analogique de parole 28.

Le fontionnement du modulateur 26 est identique à celui du modulateur 1 et ne s'en distingue que par le remplacement, par le modem du commerce 33, du circuit de portes 5, de la batterie de générateurs 6 - 9 et du multiplexeur 10.

Le démodulateur 36 de la deuxième forme de réalisation du modem semi-duplex de la figure 4 est très semblable au démodulateur 15 de la figure 2, avec un circuit 37 de contrôle automatique de gain, un détecteur d'amplitude 38, un écreteur 39, un extracteur d'horloge 42 et deux registres 41 et 41', ici, à deux cases. Le démodulateur 36, dont le fonctionnement est identique à celui du démodulateur 15, s'en distingue au plan structurel par le remplacement, par un modem V21, le même que celui du modulateur 26, référencé 40 sur le dessin, du démodulateur de fréquence 22 et du circuit de seuil 23, d'une part, et le branchement d'une ligne à retard 43 entre le détecteur 38 et l'extracteur 42.

On vient de décrire deux modems transposant des données numériques d'entrée en signaux de sortie choisis parmi plusieurs états possibles correspondant à diverses fréquences de modulation (4 ou 2) et amplitudes de modulation (2). On peut bien entendu pondérer différemment ces paramètres fréquence et amplitude et, par exemple, supprimer totalement la modulation d'amplitude.

## Revendications

1. Modem semi-duplex, caractérisé par le fait qu'il comporte des moyens (4, 4' ; 32, 32') pour recevoir des données numériques comprenant des moyens de modulation (5-11 ; 33-35) fournissant un signal occupant un état parmi une pluralité d'états et transformant ainsi les données numériques en données analogiques du type de celles de la parole et susceptibles d'être traitées par un codec GSM ou inversement (15 ; 36).

2. Modem selon la revendication 1, dans lequel il est prévu des moyens de modulation en amplitude (4, 4', 11 ; 32, 32', 34).

3. Modem selon la revendication 2, dans lequel il est prévu un modulateur (1 ; 26) de génération de signaux d'une amplitude choisie parmi plusieurs.

4. Modem selon la revendication 3, dans lequel le modulateur (1 ; 26) comporte un amplificateur à deux gains (11 ; 34).

5. Modem selon l'une des revendications 1 à 4, dans lequel il est prévu des moyens de modulation en fréquence (4-10 ; 32, 32', 33).

6. Modem selon la revendication 5, dans lequel il est prévu un modulateur (1 ; 26) de génération de signaux d'une fréquence choisie parmi plusieurs.

7. Modem selon la revendication 6, dans lequel le modulateur (1) comporte un circuit de portes logiques (5), une batterie de générateurs de fréquence (6-9) et un multiplexeur (10).

8. Modem selon la revendication 6, dans lequel le modulateur (26) comporte un modem à modulation de fréquence du commerce (33).

9. Modem selon l'une des revendications 1 à 8, dans lequel les données numériques (12 ; 27) sont reçues dans un registre à décalage (4 ; 32).

10. Modem selon la revendication 7, dans lequel il est prévu un démodulateur (15) comportant un démodulateur de fréquence (22) et un circuit de seuil (23).

11. Modem selon la revendication 8, dans lequel il est prévu un démodulateur (36) comportant un modem à modulation de fréquence du commerce (40).

12. Modem selon l'une des revendications 10 et 11, dans lequel le modulateur (1 ; 26) comporte une horloge (2 ; 30) et le démodulateur (15 ; 36) comporte deux registres à décalage (19, 19'; 41 ; 41') commandés par un extracteur d'horloge (20 ; 42) à extraction par boucle à verrouillage de phase.

## Patentansprüche

1. Semiduplexmodem, dadurch gekennzeichnet, daß es Mittel (4, 4' ; 32, 32') zum Empfang von digitalen Daten mit Modulationsmitteln (5-11; 33-35) aufweist, die ein Signal liefern, das einen Zustand unter einer Vielzahl von Zuständen besetzt, und so die digitalen Daten in analoge Daten vom Typ von Sprachdaten und solcher umformen, die von einem GSM-Codec (15; 36) verarbeitet werden können oder umgekehrt.

2. Modem nach Anspruch 1, bei dem Mittel (4, 4', 11; 32, 32', 34) zur Amplitudenmodulation vorgesehen sind.

3. Modem nach Anspruch 2, bei dem ein Modulator (1; 26) zur Erzeugung von Signalen mit einer Amplitude vorgesehen ist, die aus mehreren ausgewählt ist.

4. Modem nach Anspruch 3, bei dem der Modulator (1; 26) einen Verstärker (11; 34) mit zwei Verstärkungsfaktoren aufweist.

5. Modem nach einem der Ansprüche 1 bis 4, bei dem Mittel (4-10; 32, 32'; 33) zur Frequenzmodulation vorgesehen sind.

6. Modem nach Anspruch 5, bei dem ein Modulator (1; 26) zur Erzeugung von Signalen mit einer Frequenz vorgesehen ist, die aus mehreren ausgewählt ist.

7. Modem nach Anspruch 6, bei dem der Modulator (1) eine Schaltung aus Logikgliedern (5), eine Gruppe von Frequenzgeneratoren (6-9) und einen Multiplexer (10) aufweist.

8. Modem nach Anspruch 6, bei dem der Modulator (26) ein handelsübliches Modem (33) mit Frequenzmodulation aufweist.

9. Modem nach einem der Ansprüche 1 bis 8, bei dem die digitalen Daten (12; 27) in einem Schieberegister (4; 32) empfangen werden.

10. Modem nach Anspruch 7, bei dem ein Demodulator (15) mit einem Frequenzdemodulator (22) und einer Schwellenwertschaltung (23) vorgesehen ist.

11. Modem nach Anspruch 8, bei dem ein Demodulator (36) mit einem handelsüblichen Modem (40) mit Frequenzmodulation vorgesehen ist.

12. Modem nach einem der Ansprüche 10 und 11, bei dem der Modulator (1; 26) einen Taktgeber (2; 30) aufweist und der Demodulator (15; 36) zwei Schieberegister (19, 19'; 41; 41') aufweist, die von einem Taktextrahierer (20; 42) mit Extraktion durch Phasenverriegelungsschleife aufweist.

## Claims

1. Half-duplex modem, characterised by the fact that it comprises means (4, 4'; 32, 32') for receiving digital data comprising modulation means (5-11; 33-35) supplying a signal occupying one state amongst a plurality of states and thus transforming the digital data into analog data of the type of those of the word and able to be processed by a GSM codec or vice versa (15; 36).

2. Modem according to Claim 1, in which amplitude modulation means (4, 4', 11; 32, 32', 34) are provided.

3. Modem according to Claim 2, in which a modulator (1; 26) is provided for the generation of signals of an amplitude chosen from several.

4. Modem according to Claim 3, in which the modulator (1; 26) comprises an amplifier with two gains (11; 34).

5. Modem according to one of Claims 1 to 4, in which frequency modulation means (4-10; 32, 32', 33) are provided.

6. Modem according to Claim 5, in which a modulator (1; 26) is provided for the generation of signals of a frequency chosen from several.

7. Modem according to Claim 6, in which the modulator (1) comprises a circuit of logic gates (5), a set of frequency generators (6-9) and a multiplexer (10).

8. Modem according to Claim 6, in which the modulator (26) comprises a commercially available modem with frequency modulation (33).

9. Modem according to one of Claims 1 to 8, in which the digital data (12; 27) are received in a shift register (4; 32).

10. Modem according to Claim 7, in which a demodulator (15) is provided comprising a frequency demodulator (22) and a threshold circuit (23).

11. Modem according to Claim 8, in which a demodulator (36) is provided comprising a commercially available modem (40) with frequency modulation.

12. Modem according to one of Claims 10 and 11, in which the modulator (1; 26) comprises a clock (2; 30) and the demodulator (15; 36) comprises two shift registers (19, 19'; 41; 41') controlled by a clock extractor (20; 42) with extraction by a phase-locking loop.
